# EUROPEAN PATENT APPLICATION

(11) **EP 4 235 437 A1**
(43) Date of publication of application: **30.08.2023**
(21) Application number: 22158221.6
(22) Date of filing: 23.02.2022
(51) Int. Cl.: G06F 11/36

(54) **A TEST SYSTEM AND METHOD FOR TESTING OF APIS**

(71) Applicant: Siemens Aktiengesellschaft, 80333 München (DE)
(72) Inventor: Gatzhammer, Bernhard, 85276 Pfaffenhofen a.d.Ilm (DE)
(74) Representative: Siemens Patent Attorneys

(57) **Abstract**

The test system (10) and method according to the application enables automated testing of APIs in the context of a Software as a Service (SaaS, 20). Therefor the system (10) and method use API behavioral descriptions (33, 34) in combination with syntactical information (31, 32) from API specifications.

## Description

### Technical field:

The present invention relates to a test system and computer implemented method for testing of APIs. Furthermore, a corresponding computer program product is provided.

### Background of the invention:

Software as a service (SaaS) systems are offering application programming interfaces (APIs) for machine-type client interactions. SaaS systems usually are operated by their provider and consumed by machine-type clients through APIs. The APIs are exposed via public or private communication networks. Over the lifetime of a SaaS system, its provider might incorporate new features, resulting in modifications of the offered APIs. In order to keep operational and software maintenance costs low, providers often keep only the latest version of the system available and, hence, only the latest version of its APIs. This results in the requirement that any performed changes to the API must be backward compatible for clients, otherwise existing client workflows might be broken. It is, thus, critical to detect any breaking changes to be deployed to a SaaS system and its APIs, before replacing the existing version of the system with an updated one.

Up to now, to prevent breaking changes in SaaS APIs, a large set of approaches and technologies can be applied at different times and levels in the SaaS development and operation lifecycle. Manual reviews of APIs are typically performed by experienced individuals. As manual reviews involve the potential for human errors and are restricted much by available resources, automated static analysis and runtime tests are used to increase reliability and coverage. Runtime tests can be applied at different levels such as unit, integration, or system level. A couple of existing systems for API system-level testing use API specifications to automatically derive detailed end-to-end tests.

API specifications are created and maintained by the provider of the APIs, and typically published as part of an API's documentation. They contain syntactical information about an API in a machine-readable format. For HTTP APIs, a popular API specification format is OpenAPI specification, which is based on JSON or YAML documents.

However, existing test systems only can parse API specifications, derive syntactical information about the API, and perform automated tests against the API based on this information. In case of a system update, existing test systems only verify to some extent whether the new API version is backward compatible.

### Summary of the invention:

It is therefore a goal of the present invention to provide a test system for testing APIs which overcomes the above-mentioned disadvantages. A further goal of the invention is to provide a corresponding computer-implemented method and computer program product.

This object is solved by the subject matter of the independent claims. Further advantageous features are subject matter of the dependent claims.

According to a first aspect of the invention, a test system is provided, configured to test an application programming interface (API) for machine-type client interactions, the test system comprising API specific syntactical specification and behavioral descriptions in a machine-readable format, the test system comprising a test execution engine that is configured to provide automated testing for the API and to adapt and/or create adapted software tests based on dynamic software data derived from syntactical specification and behavioral descriptions.

SaaS systems are operated by their provider and consumed by machine-type clients through APIs.

The APIs are exposed via public or private communication networks.

Machine-type clients are software programs running autonomously or steered by human users.

Syntactical specification / information in the context of this application is static information about the offered API endpoints such as possible operations, parameters, and payload schemas.

The test system has, among others, the advantage, that it reacts automated to modifications of the offered APIs that result from incorporated new features by the provider of the SaaS system.

A further advantage is, that it becomes easier to validate backward compatible changes to the SaaS system more comprehensively, since otherwise existing client workflows might be broken. The test system supports a simple way of validating extensive changes. The critical phase to detect breaking changes to be deployed to a SaaS system and its APIs, and the digital replacing of an existing version of the system with an updated one, is improved by a continuous and automated adaption. This even keeps operational and software maintenance costs lower.

Since the invention focusses on the system test level, there, APIs are tested from a system client's point of view. As creating and maintaining a thorough test suite for a medium to large sized API can poses its own challenges.

In an advantageous embodiment of the invention, the test system is configured to automatically derive detailed end-to-end tests from behavioral descriptions and syntactical specification. End-to-end test in the context of the application means tests executed from an application client's point of view against the whole of the application.

The test system takes into account syntactical information from API specifications as well as semantic information about dependencies between operations, input and output parameters, or complex stateful dynamic behavior. In a further advantageous embodiment of the invention, the test system comprises syntactical specification, that are created and maintained by the provider of the APIs. Preferably they are published as part of an API's documentation.

In another advantageous embodiment of the invention, the test system is configured to consider individual API operations and their statically defined inputs and outputs. In particular, the test system can be configured to consider dependencies between operations and/or between input and output parameters and/or complex stateful dynamic behavior of the API. Especially, the test system can be configured to combine API operations in a desired sequence so that case behavioral aspects can be triggered and/or validated.

In a further embodiment of the invention, the test system is configured to receive behavioral descriptions created by the provider, which is especially advantageous in case the provider wants to test its own system. The test system is further configured to combine the behavioral descriptions with static information.

In an alternative embodiment of the invention, the test system is configured to use behavioral descriptions created by an external client developer and configured to verify whether their client behavior is supported by the application of the test system.

In a further embodiment of the invention, the test system is configured such, that the API is an HTTP API and the API specification format is OpenAPI specification, which is based on JSON or YAML documents.

In another advantageous embodiment of the invention, the test system's test execution engine is configured to be triggered by an external system. This has the advantage, that the test execution engine is the main driver of the test. It gets initially triggered by an external system, e.g., during deployment of a new API version to test backward compatibility. According to a further aspect of the invention, a computing device configured with an application causing the computing device to function as a test system as described is provided. This is advantageous since the API test system such can be run on an own test device outside of the SaaS system, in order to simulate the perspective of a system external client. API requests are issued from the test device to the SaaS APIs via the network.

This approach hence focusses on the system test level. There, APIs are tested from a system client's point of view. As creating and maintaining a thorough test suite for a medium to large sized API can poses its own challenges, a couple of existing systems for API system-level testing use API specifications to automatically derive detailed end-to-end tests. API specifications are created and maintained by the provider of the APIs, and typically published as part of an API's documentation. They contain syntactical information about an API in a machine-readable format. For HTTP APIs, a popular API specification format is OpenAPI specification, which is based on JSON or YAML documents. Existing test systems can parse API specifications, derive syntactical information about the API, and automatically perform tests against the API based on this information. This can be used to verify alignment of API specification and implementation and can, in case of a system update, verify to some extent that the new API version is backward compatible. Purely API specification-based test systems focus on the form of individual API operations and their statically defined inputs and outputs. They do not take into account dependencies between operations, between input and output parameters, or complex stateful dynamic behavior. Most APIs, however, contain some degree of behavior not covered by the machine-readable parts of API specifications, which is crucial for API clients. If such behavioral aspects should be tested, existing tools allow to manually create test setup and teardown behavior, to bring the system in a desired state or check a particular state. They do not allow to freely combine API operations in a desired sequence and often require to repeat all of the API operation details in case behavioral aspects should be triggered or validated.

According to a further aspect of the invention a computer-implemented method for testing an API for machine-type client interactions is provided, the method comprising the following steps:
The test execution engine first gets the API syntactic information from the API syntactic representation module, which parses the information from an API specification residing in the database.

The test execution engine then gets the test steps from the API dynamic behavior module, which reads and parses an API behavioral description from the database for this purpose. The test execution engine then executes the test steps in form of a loop over each step. Test steps enriched with syntactic information then form instructions.

Within each loop iteration, first the step to be executed is read, defined by the API behavior.

Then, the behavioral information in the step is enriched with syntactical information to provide all technical details expected in the actual request and response to the API. After enrichment, the test execution engine performs the request to the SaaS API and awaits the response.

The response is validated against expected behavior and syntactic expectations and test results are stored for later reporting.

Once all test steps have been executed, the overall results are forwarded to the test reporting engine, which stores them in the database for later retrieval by external systems. According to a further aspect of the invention, a computer program product is provided, comprising instructions which carry out the predefined method, when the program is executed by the test system.

Since most APIs, however, contain some degree of behavior not covered by machine-readable parts of API specifications, which is crucial for API clients, such behavioral aspects should be taken into account and be tested. The provided test system and method are advantageous to existing tools, which only allow to manually create a test setup and teardown behavior, to bring the system in a desired state or check a particular state. The test system and method according to the invention allow to freely combine API operations in a desired sequence. It doesn't even require to repeat any of the API operation details in case behavioral aspects should be triggered or validated.

The invention is explained in more detail below with the aid of an exemplary embodiment illustrated in the drawing, in which:
Fig. 1 Schematically shows an inventive Test system 10 with its components 11-14, 30 arranged with a SaaS system 20 and its APIs,
Fig. 2 Schematically shows a sequence diagram of the inventive method, when executing a set of test steps as dynamic behavior of the API test system 10.

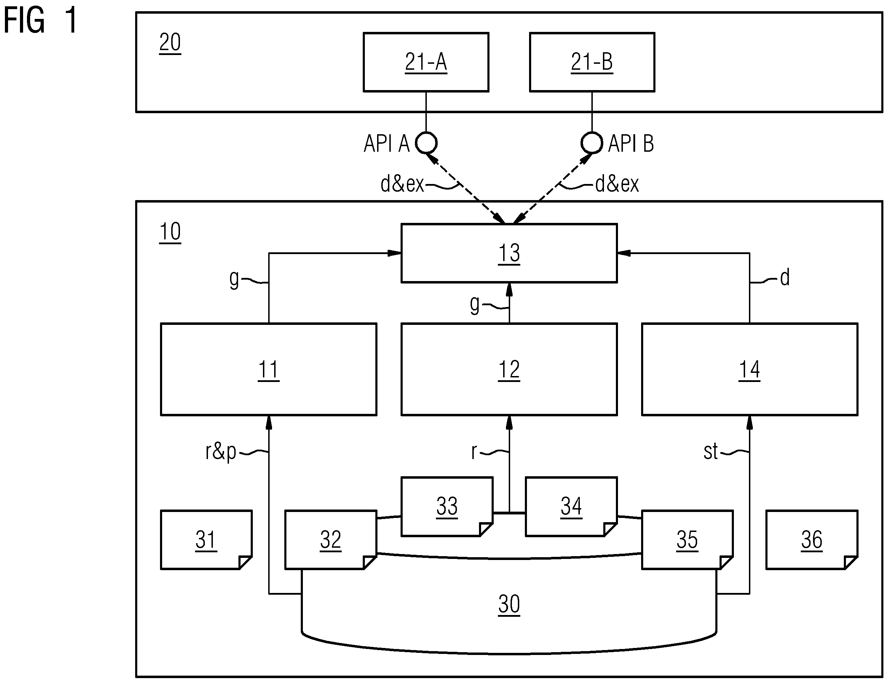

The invention defines an API test system 10 as shown in Figure 1. The API test system 10 consists of an API syntactic representation module 11, an API dynamic behavior module 12, a test execution engine 13, a test reporting engine 14, and a database 30 to store API specifications 31-32, dynamic behavior descriptions 33-34, as well as test results 35-36. The syntactic representation module 11 is able to read and parse r&p API specifications 31-32 and represent their syntactic information in the system towards the test execution engine 13. The dynamic behavior module 12 is able to read r dynamic behavior descriptions 33-34 and represent them in the system as test steps for the test execution engine 13. The test execution engine 13 bases its actions on the information provided g by the API syntactic representation module 11 and the API dynamic behavior module 12. It derives and executes d&e API system tests of the SaaS system 20. The test reporting engine 14 takes test execution results 35-36 and stores st them in the system database 30.

The API test system 10 preferably is run on an own test device outside of the SaaS system 20, in order to simulate the perspective of a system external client. API requests are issued from the test device to the SaaS APIs API-A/-B via a network.

Preferably the API specifications 31-32 are obtained from the provider of the SaaS APIs. The API behavioral descriptions 33-34 can be either created by the provider, in case the provider wants to test its own system 20, or can be created by external client developers to verify their client behavior being supported by the system 20.

Lines, dashed lines and arrows visualize data connections.

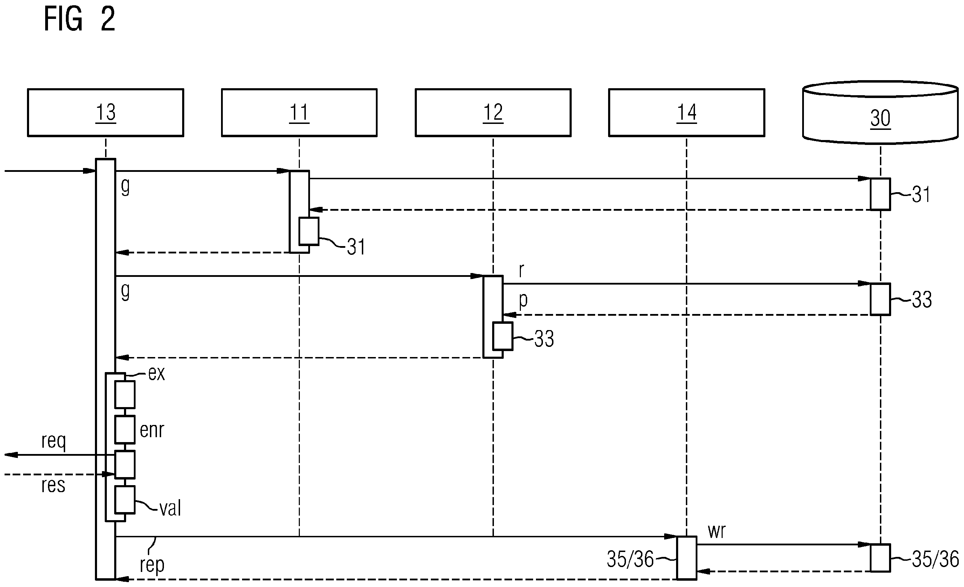

The execution of a set of test steps against a SaaS API is shown in the sequence diagram of Figure 2. The test execution engine 13 is the main driver of the test. It gets initially triggered t by an external system, e.g., during deployment of a new API version to test backward compatibility. The test execution engine 13 first gets the API syntactic information 31 from the API syntactic representation module 11, which parses p the information from an API specification residing in the database 30. The test execution engine 13 then gets the test steps from the API dynamic behavior module 12, which reads r and parses p an API behavioral description 33 from the database 30 for this purpose. The test execution engine 13 then executes ex the test steps in form of a loop over each step. Within each loop iteration, first the step to be executed is read r, defined by the API behavior. Then, the behavioral information 33 in the step is enriched with syntactical information 31 to provide all technical details expected in the actual request and response to the API. After enrichment enr, the test execution engine 13 performs the request req to the SaaS API and awaits the response res. The response res is validated against expected behavior and syntactic expectations and test results 36-36 are stored wr for later reporting. Once all test steps have been executed ex, the overall results are forwarded to the test reporting engine 14, which stores them in the database 30 for later retrieval by external systems.

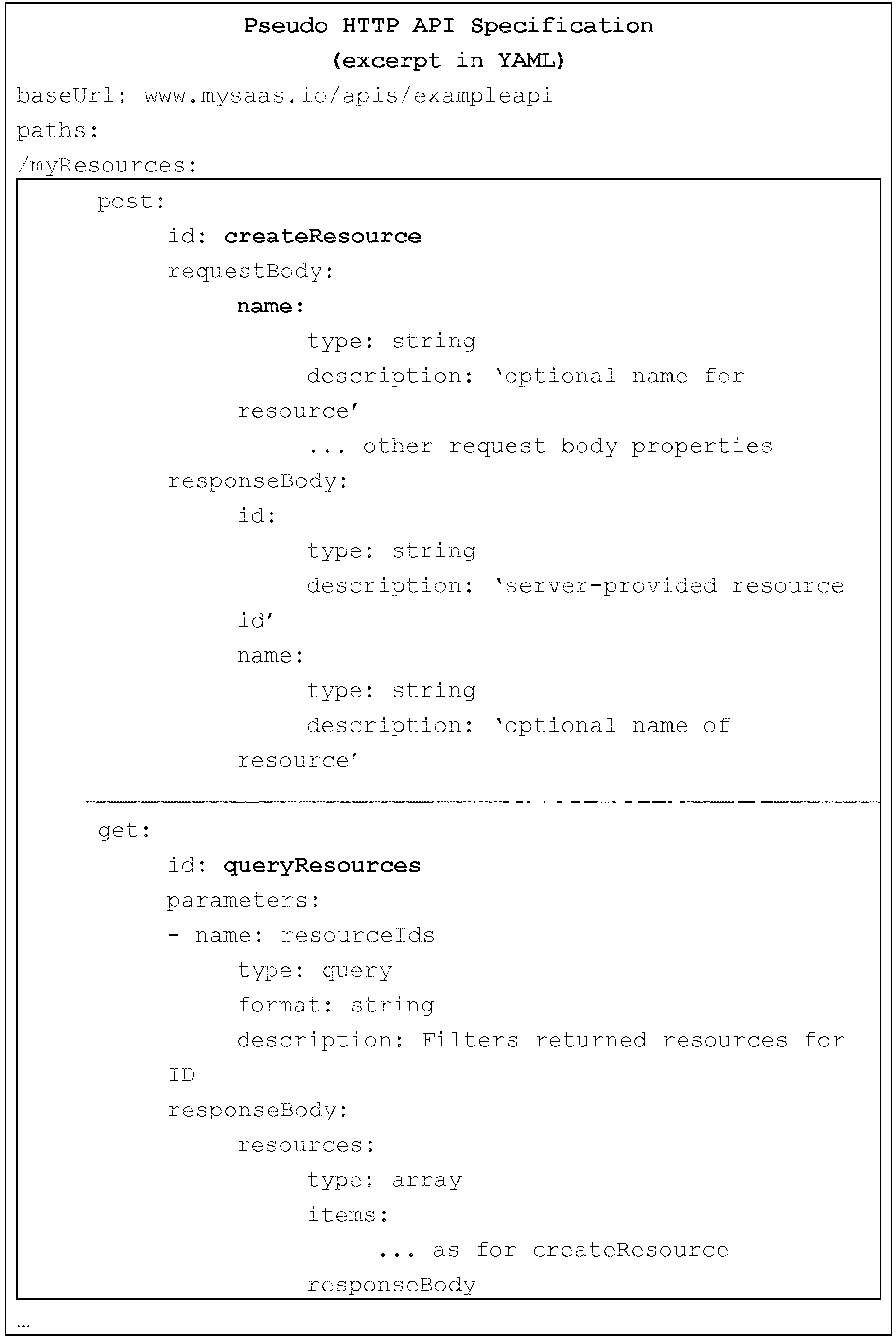

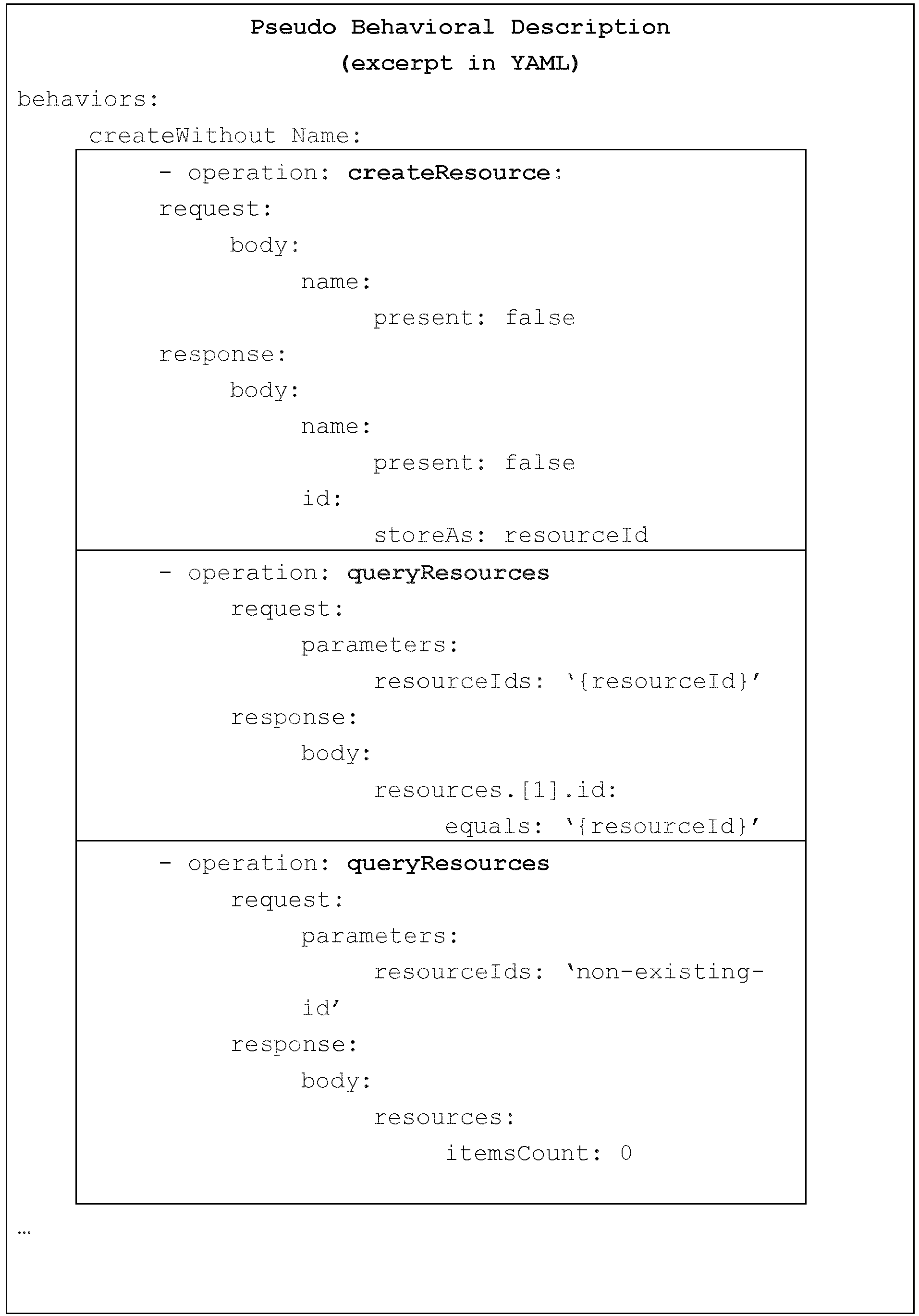

The tabular shows a pseudo HTTP API specification 31 and pseudo behavioral description 33 excerpts. An example test scenario is described based on these pseudo API specification and pseudo behavioral description excerpts. Both excerpts are based on YAML, though this is not essential for the test system 10. The API specification format is close to the OpenAPI specification standard but simplified for this example. The tabular shows only the parts of the documents relevant for the following example.

The API specification 31 defines two operations of an HTTP API, mapped to the same URL endpoint www.mysaas.io/apis/exampleapi/myResources, which is formed by the combination of the baseUrl property value and the paths array item /myResources key name. HTTP POST and GET methods define the two operations. First, a createResource operation is defined, which takes an optional request body property name plus some more not-shown properties. It returns a server-defined resource ID, the name, if provided in the request, and some not-shown properties. The second operation, queryResources, takes a URL query parameter resourcelds and maps to a response body containing an array of existing resources. The resourceIDs query parameter reduces the returned resources to those with matching IDs.

The behavioral description 33 defines a behavior 33 createWithoutName, consisting of a sequence of three steps. Each step refers to an operation defined in the API spec, identified by its operation ID. The createWithoutName behavior first creates a resource, then queries resources with the created resource's ID, and finally queries again but with a non-existing resource ID.

The test execution engine 13 will interpret the createWithoutName behavior 33 as a sequence of test steps to be executed together in the defined order. Each step in the behavior 33 corresponds to one HTTP request towards the SaaS API 20 defined by the API specification 31. The behavior steps do not fully define the HTTP requests, but only focus on the parts which are relevant to evoke and validate a certain behavior. The test execution engine 13 enriches enr the behavior steps with all information defined for the respective operation in the API specification 31. For example, in the first step the createResource operation is called. The behavioral description 33 only defines that the name property should not be sent in the request. Via enrichment enr, other mandatory or optional parameters and body properties defined in the API specification 31 will be sent with example or default values. Similarly, the first step behavior only defines that in the response body the name property must not be present and that an id property is present. Via enrichment enr, all other non-optional response properties are expected to be present with any value according to defined data formats. The first test step also stores the returned body property ID's value for later use in the second step. In the second step, the queryResources operation is invoked with the id of the resource created in the first step. The expected behavior is that in the response of the second step only the just created resource is returned, which is defined in the response section of the second behavior step. Via enrichment, the presence of other properties is expected and validated automatically. The third and final step in the behavior checks that, when a non-existing resource ID is used, the response should be an empty array.

### Summary:

The invention combines syntactic API information obtained from API specifications 31-32 with manually created behavioral API descriptions 33-34. Key to the system 20 is that the dynamic descriptions can be reduced to the minimum necessary to trigger and validate the relevant dynamic behavior. These descriptions are automatically enriched enr with syntactic information from API specifications 31-32 to test the complete bandwidth of parameters and properties offered by the API. This reduces the overall effort for creating and maintaining behavioral API tests significantly when compared to existing solutions and allows to expand test coverage to detect breaking changes.

**References:**

| | |
|---|---|
| 10 | API test system |
| 11 | API syntactic representation module |
| 12 | API dynamic behavior module |
| 13 | Test execution engine |
| 14 | Test reporting engine |
| 20 | SaaS System |
| 21 | Service A, B |
| API | application programming interface A, B |
| 30 | Database |
| 31 | API A specification |
| 31 | API B specification |
| 33 | API A behavioral description |
| 34 | API B behavioral description |
| 35 | API A test results |
| 36 | API B test results |
| d&ex | derive & execute (execute loop of test steps) |
| st | store |
| r&p | read & parse (API specification, behavioral description) |
| g | get (e.g. test steps, next test step) |
| enr | enrich |
| req | request to SaaS API |
| res | response |
| rep | report test results |
| val | validate response |
| wr | write test results |
| t | test trigger |

## Claims

1. Test system (10) configured to test an application programming interface (API) for machine-type client interactions,
the test system (10) comprising API specific syntactical specification (31, 32) and behavioral descriptions (33, 34) in a machine-readable format,
the test system (10) comprising a test execution engine (13) that is configured to provide automated testing for the API and to adapt and/or create adapted software tests based on dynamic software data derived from syntactical specification (31, 32) and behavioral descriptions (33, 34).

2. Test system (10) as claimed in the preceding claim, configured to automatically derive detailed end-to-end tests from behavioral descriptions (33, 34) and syntactical specification (31, 32).

3. Test system (10) as claimed in one of the preceding claims, wherein the syntactical specification (31, 32) are created and maintained by the provider of the APIs (API-A,-B) .

4. Test system (10) as claimed in one of the preceding claims, configured to consider individual API operations and their statically defined inputs and outputs.

5. Test system (10) as claimed in preceding claim 4, configured to consider dependencies between operations and/or between input and output parameters and/or complex stateful dynamic behavior of the API.

6. Test system (10) as claimed in one of the preceding claims 4 or 5, configured to combine API operations in a desired sequence so that case behavioral aspects can be triggered and/or validated.

7. Test system (10) as claimed in one of the preceding claims, configured to derive behavioral descriptions (33, 34) created by the provider.

8. Test system (10) as claimed in one of the preceding claims 1 to 6, configured to derive behavioral descriptions (33, 34) created by an external client developer and configured to verify whether their client behavior is supported by the system.

9. Test system (10) as claimed in one of the preceding claims, wherein the API (API-A,-B) is an HTTP API and the API specification format is OpenAPI specification, which is based on JSON or YAML documents.

10. Test system (10) as claimed in one of the preceding claims, wherein the test execution engine (13) is configured to be triggered by an external system.

11. A computing device configured with an application causing the computing device to function as a test system (10) as claimed in one of the preceding claims.

12. Computer-implemented method for testing an application programming interface (API) for machine-type client interactions,
the method comprising the steps:
- A test execution engine (13) gets (g) the API syntactical specification (31, 32) from the API syntactic representation module (11),
- the API syntactic representation module (11) parses (p) the API syntactical specification (31, 32) residing in a database (30),
- the API dynamic behavior module (12) reads (r) and parses (p) an API behavioral description (33, 34) from the database (30) to derive test steps,
- the test execution engine (13) gets (g) the test steps from the API dynamic behavior module (12),
- the test execution engine (13) then executes (ex) the test steps in form of a loop over each step, wherein within each loop iteration,
o first the test step to be executed (ex) is read (r), defined by the API behavior,
o then, the API behavioral description (33, 34) in the test step is enriched (enr) with API syntactical specification (31, 32) to provide all technical details expected in the actual request (req) and response (res) to the API,
- after enrichment (enr), the test execution engine (13) performs the request (req) to the API and awaits the response (res),
- the response (res) is validated against expected behavior and syntactic expectations,
- test results (35, 36) are stored (st),
- if all test steps are executed (ex), the overall test results are forwarded to the test reporting engine (14), which stores (st) them in the database (30).

13. A computer program product comprising instructions which, when the program is executed by the test system (10) of one of the preceding claims 1 to 10, carry out the method of claim 12.
